# EUROPÄISCHE PATENTSCHRIFT

(11) **EP 3 475 534 B1**
(45) Veröffentlichungstag und Bekanntmachung des Hinweises auf die Patenterteilung: **18.03.2020**
(21) Anmeldenummer: 17749158.6
(22) Anmeldetag: 28.07.2017
(51) Int. Cl.: F01D 9/06, F01D 25/16, F01D 25/24, F01D 25/12, F02C 7/12

(54) **GASTURBINE MIT GETRENNTER KÜHLUNG FÜR TURBINE UND ABGASGEHÄUSE**
GAS TURBINE WITH SEPARATE COOLING FOR TURBINE AND EXHAUST CASING
TURBINE À GAZ À REFROIDISSEMENT SÉPARÉ POUR LA TURBINE ET LE CARTER DES GAZ D'ÉCHAPPEMENT

(30) Priorität: 12.09.2016 DE 102016217320
(43) Veröffentlichungstag der Anmeldung: 01.05.2019
(73) Patentinhaber: Siemens Aktiengesellschaft, 80333 München (DE)
(72) Erfinder: ALLEBROD, Dirk, 46145 Oberhausen (DE); SONNEN, Stephan, 45289 Essen (DE)
(86) Internationale Anmeldenummer: PCT/EP2017/069131
(87) Internationale Veröffentlichungsnummer: WO 2018/046178

(56) Entgegenhaltungen:
- EP-A2- 2 497 907
- EP-A2- 2 573 329
- WO-A1-2015/191039
- US-A1- 2013 224 011
- US-A1- 2014 205 447

## Beschreibung

Die Erfindung betrifft eine Gasturbine mit einem Turbinengehäuse und einem Abgasgehäuse, die unabhängig voneinander mit Kühlluft versorgt werden können, sowie ein Verfahren zum Betrieb einer Gasturbine.

Innerhalb eines Abgasgehäuses einer Gasturbine sind typischerweise ein Lagergehäuse sowie ein innerer und ein äußerer Konus eines Abgasdiffusors angeordnet, die alle über ein System aus Streben miteinander verbunden sind, welches beispielsweise aus sechs gleichmäßig im Umfang angeordneten Lagerstreben besteht. Die Lagerstreben erstrecken sich dabei vom Lagergehäuse radial auswärts durch den Abgasdiffusor hindurch zum Außengehäuse des Abgasgehäuses. Im Heißgaspfad des Abgasdiffusors werden die Lagerstreben durch einen weiteren Strebensatz abgeschirmt, der sie umgibt und der hohl ausgeführt ist, und als Stütze für den Abgasdiffusor dient, so dass die Lagerstreben vor dem Heißgas geschützt sind und mittels durch den Hohlraum strömende Luft gekühlt werden können. Dadurch wird das Strebensystem auch gegenüber Temperaturtransienten unempfindlicher. Ein System dieser Art wird in der US 2014/205447 A1 offenbart, bei dem eine entsprechende Kühlung der Bauteile erfolgt und diese daher aus kostengünstigerem Material hergestellt werden können. Ferner ergibt sich durch eine Führung der Kühlluft von einem Bauteil ins andere eine ähnliche Temperaturverteilung über Bauteilgrenzen hinweg.

Zum Kühlen des Abgasgehäuses wird Kühlluft nach dem Stand der Technik durch das Außengehäuse der Turbine geleitet, wo die Kühlluft, bevor sie in das Abgasgehäuse strömt, bereits zur Wärmekonditionierung verwendet wird, d.h. zur Kühlung der Bauteile, die den Heißgaspfad in der Turbine begrenzen. Über entsprechende Hohlräume wird die Kühlluft vom Außengehäuse der Turbine zum Verbindungsflansch mit dem Abgasgehäuse geleitet und dort durch Öffnungen den Kopfseiten der Lagerstreben zugeführt.

Ein Zentriersitz an der Schnittstelle des Außengehäuses der Turbine und des Abgasgehäuses sorgt für eine genaue zentrische Positionierung des Lagers und somit des Rotors in der Maschine.

Wenn sich beide Gehäuse, also Turbine und Abgasgehäuse, unterschiedlich ausdehnen, kommt es beim An- bzw. Abfahren der Gasturbine zum Lösen dieser Passung und somit zu einem Absacken des Lagergehäuses.

Ferner kann es bei vergleichsweise großen Gasturbinen im Hinblick auf deren Transportierbarkeit insbesondere bezüglich zulässiger Außenmaße im Bereich der Weiterleitung von Kühlluft vom Außengehäuse der Turbine zum Abgasgehäuse zu Platzproblemen kommen, so dass ein benötigter Strömungsquerschnitt für den die Kühlluft transportierenden Kanal nicht bereitgestellt werden kann oder umgekehrt zulässige Höchstmaße für einen Transport überschritten werden.

Aufgabe der Erfindung ist es, eine Gasturbine bereitzustellen, die eine verbesserte Kühlung des Abgasgehäuses bei geringem Platzbedarf ermöglicht. Eine weitere Aufgabe der Erfindung ist es, ein entsprechendes Verfahren zum Betrieb anzugeben.

Die Erfindung löst die auf eine Gasturbine gerichtete Aufgabe, indem sie vorsieht, dass bei einer Gasturbine mit einer Turbine, umfassend ein Turbinengehäuse, einen äußeren und einen inneren Gehäuseteil, zwischen denen im Betriebe der Gasturbine ein Heißgas strömt, wobei zwischen dem äußeren Gehäuseteil und dem Turbinengehäuse zumindest teilweise ein Ringkanal gebildet ist, der dazu ausgebildet ist, ein Kühlfluid aufzunehmen, und mit einem in Strömungsrichtung eines Heißgases der Turbine nachgelagerten Abgasgehäuse mit einem Lagersystem für einen Rotor, umfassend über den Umfang angeordnete Lagerstreben, die sich von einem Wellenlager zu einem Außengehäuse erstrecken und im Heißgaspfad eines im Abgasgehäuse angeordneten Abgasdiffusors durch einen weiteren Strebensatz abgeschirmt werden, der die Lagerstreben umgibt und der hohl ausgeführt ist, und als Stütze für den Diffusor dient, so dass die Lagerstreben vor dem Heißgas geschützt sind und mittels durch den Hohlraum strömender Luft gekühlt werden können, wobei zur Zentrierung von Turbine und Abgasgehäuse diese über eine Passung miteinander verbunden sind, die Turbine und das Abgasgehäuse unabhängig voneinander mit Kühlluft versorgt werden können, wodurch sich die Kühlluftmengen für Turbine und Abgasgehäuse und die jeweils dort erreichbaren Temperaturen getrennt einstellen lassen. Dies führt nicht nur zu einer Optimierung, sprich Verringerung des Kühlluftbedarfs, sondern erlaubt überhaupt eine gezielte Temperaturkontrolle von Turbine und Abgasgehäuse.

In einer vorteilhaften Ausführungsform der Erfindung ist der Ringkanal in Umfangsrichtung durch eine Abtrennung fluiddicht vom Abgasgehäuse getrennt. Im Stand der Technik waren beide Bereiche noch miteinander fluidtechnisch verbunden. Nach der Erfindung ist eine solche Verbindung nicht nur nicht erforderlich, sondern unerwünscht.

Dabei ist es zweckmäßig, wenn die Abtrennung als Trennblech ausgebildet ist. Trennbleche werden typischerweise auch als Schottbleche bezeichnet. Da im Bereich von Turbine und Abgasgehäuse keine großen Druckdifferenzen vorherrschen, können die Abtrennungen verhältnismäßig dünnwandig ausgebildet sein. Dies erlaubt die Verwendung einfacher und kostengünstiger Bauteile.

Gemäß einer vorteilhaften Weiterführung kann auch vorgesehen sein, dass die Lagerstreben Kopfseiten umfassen, denen das Kühlmittel direkt zuführbar ist. Dies ist deswegen vorteilhaft, weil die Kopfseiten radial außen liegen und einfach erreichbar sind, d.h. die Kühlmittelzufuhr ist problemlos in einem radialen Außenbereich des Abgasgehäuses umsetzbar. Ferner ist es vorteilhaft, wenn jede der Lagerstreben einen in der jeweiligen Lagerstrebe angeordneten Kühlhohlraum zur Führung eines Kühlmittels von radial außen nach radial innen im Abgasgehäuse aufweist. In einem solchen Fall kann die Kühlluft direkt durch die Lagerstrebe von radial außen nach radial innen geleitet werden, so dass sich das Kühlmittel, d.h. die Kühlluft, schnell im Abgasgehäuse verteilen lässt.

In diesem Zusammenhang ist es besonders zweckmäßig, wenn die Kühlhohlräume im Bereich des Wellenlagers enden, so dass auch dieses zuverlässig gekühlt werden kann.

Entsprechend einer besonders bevorzugten Ausführungsform umfasst die Gasturbine weiter eine Vorrichtung zur Regelung einer zentrischen Positionierung von Turbine und Abgasgehäuse über jeweils zugeführte Kühlmittelmengen. Diese Regelung ermittelt Temperaturen und Positionen an verschiedenen Punkten der Turbine und des Abgasgehäuses und stellt die jeweilige Luftzufuhr so ein, dass das thermische Verhalten der Bauteile ausgeglichen und ein Lösen der Passung zwischen Turbine und Abgasgehäuse verhindert werden.

Die auf ein Verfahren gerichtete Aufgabe wird gelöst durch ein Verfahren zum Betreiben einer Gasturbine mit einer Turbine und einem Abgasgehäuse, bei dem Kühlmittel der Turbine und dem Abgasgehäuse getrennt zugeführt wird. Insbesondere werden Turbine und Abgasgehäuse zentriert, indem ihnen Kühlmittel geregelt zugeführt wird. Dabei wird vorteilhafterweise Kühlmittel so zugeführt, dass eine unterschiedliche thermische Ausdehnung von Turbine und Abgasgehäuse vermieden wird, so dass eine genaue zentrische Positionierung in einer Passung an einer Schnittstelle der Turbine und des Abgasgehäuses gewährleistet ist.

Mit der Gasturbine nach der Erfindung und dem erfinderischen Verfahren, wonach ein Kühlmittel getrennt der Turbine und dem Abgasgehäuse zugeführt wird, kann die Kühlung der Gehäuse über die Kühlmittelmengen besser als vorher kontrolliert werden.

Ferner lässt sich die Kühlmittelversorgung einfacher und insbesondere mit geringerem Platzbedarf ausführen, als bei der aus dem Stand bekannten Kühlung, bei der das Kühlmittel von der Turbine in das Abgasgehäuse weitergeleitet wurde. Bei großen Gasturbinen bedeutet dies, dass auch jetzt die Erfordernisse hinsichtlich der maximalen Abmessungen für einen Transport eingehalten werden können.

Eine Kontrolle der Kühlung bzw. eine direkte Einflussnahme auf die Gehäusetemperaturen von Turbine und Abgasgehäuse ermöglicht einen zuverlässigen Zentriersitz an der Schnittstelle der Gehäuse, so dass ein Rotor-Offset im Betrieb der Gasturbine verringert wird.

Die Erfindung wird beispielhaft anhand der Zeichnungen näher erläutert. Es zeigen schematisch und nicht maßstäblich:
Figur 1 einen Ausschnitt einer Gasturbine mit einer gemeinsamen Kühlluftversorgung von Turbine und Abgasgehäuse nach dem Stand der Technik;
Figur 2 einen Ausschnitt einer Gasturbine mit einer getrennten Kühlluftversorgung von Turbine und Abgasgehäuse nach der Erfindung.

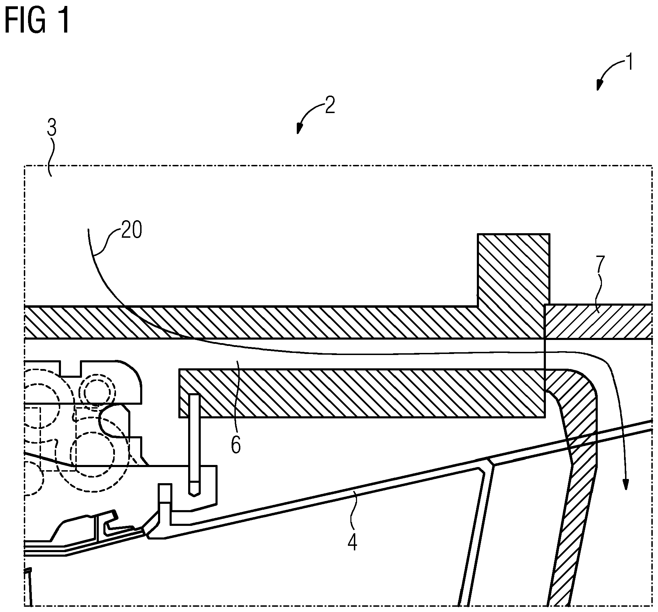

Die Figur 1 zeigt schematisch und beispielhaft einen Ausschnitt einer Gasturbine 1, insbesondere den Übergang zwischen Turbine 2 und Abgasgehäuse 7. Gemäß dem in der Figur 1 gezeigten Stand der Technik erfolgt die Kühlluftversorgung von Turbine 2 und Abgasgehäuse 7 über einen gemeinsamen Luftstrom 20, der zuerst den durch ein Turbinengehäuse 3 und einen äußeren Gehäuseteil 4 zumindest teilweise gebildeten Ringkanal 6 der Turbine 2 durchströmt, bevor er in das Abgasgehäuse 7 einströmen kann. Eine derartige Konstruktion benötigt vergleichsweise viel Platz und lässt keine Einflussnahme auf Einzelkomponenten, wie Turbine 2 und Abgasgehäuse 7, zu.

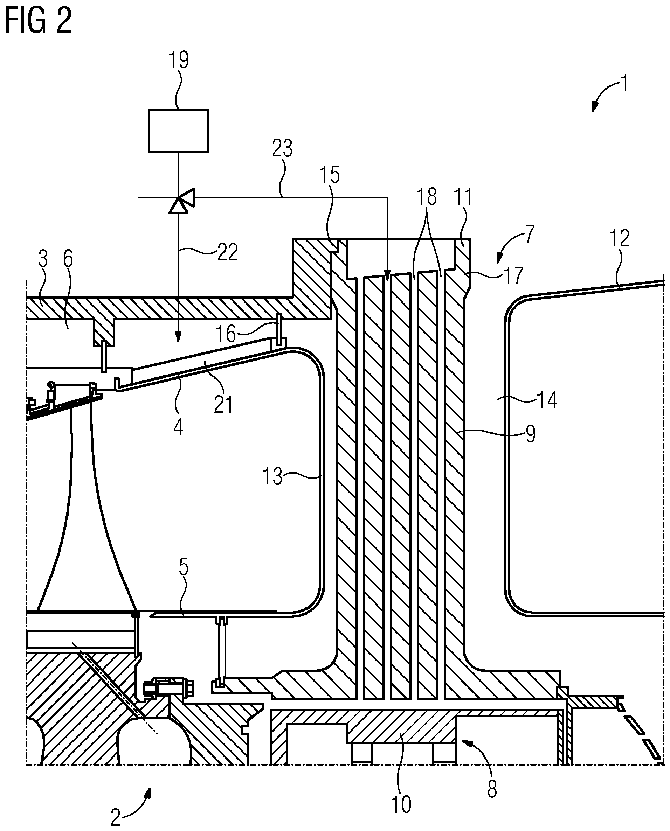

Die Figur 2 zeigt eine getrennte Kühlluftversorgung von Turbine 2 und Abgasgehäuse 7 nach der Erfindung. Der Ausschnitt der Figur 2 ist etwas größer gewählt, als in Figur 1 und zeigt ferner im Bereich der Turbine 2 einen inneren Gehäuseteil 5, der zusammen mit dem äußeren Gehäuseteil 4 den Heißgaspfad der Turbine 2 umschließt, sowie das Lagersystem 8 für einen Rotor, umfassend über den Umfang angeordnete Lagerstreben 9, die sich von einem Wellenlager 10 zu einem Außengehäuse 11 erstrecken. Diese werden im Heißgaspfad eines im Abgasgehäuse 7 angeordneten Abgasdiffusors 12 durch einen weiteren Strebensatz 13 abgeschirmt, der die Lagerstreben 9 umgibt und der hohl ausgeführt ist, und als Stütze für den Diffusor 12 dient, so dass die Lagerstreben 9 vor dem Heißgas geschützt sind und mittels durch den Hohlraum 14 strömender Luft gekühlt werden können.

Zur Zentrierung von Turbine 2 und Abgasgehäuse 7 sind diese über eine Passung 15 miteinander verbunden.

Gemäß der Erfindung werden Turbine 2 und Abgasgehäuse 7 getrennt mit Kühlluft beaufschlagt.

Ein erster Kühlluftstrom 22 versorgt den Ringkanal 6 im Bereich der Turbine 2 und schützt das Turbinengehäuse 3 vor hohen Temperaturen aus dem Abgasstrom.

Ein zweiter Kühlluftstrom 23 kühlt die Kopfseiten 17 der Lagerstreben 9 sowie über Kühlhohlräume 18 das Lagersystem 8.

Infolge der Trennung der Kühlluftzufuhr weist die Turbine 2 zwischen Turbinengehäuse 3 und äußerem Gehäuseteil 4 eine Abtrennung 16 auf, um die zu kühlenden Bereiche fluidtechnisch voneinander zu trennen.

Ferner kann der äußere Gehäuseteil 4 eine thermische Isolierung 21 aufweisen, so dass die Menge an Kühlmittel im Bereich der Turbine 2 weiter verringert werden kann.

Figur 2 zeigt ferner eine Vorrichtung 19 zur Regelung der ersten und zweiten Kühlluftströme 22, 23.

Durch die Aufteilung und mögliche kontrollierte Versorgung der Bauteile mit Kühlluft, kann das thermische Verhalten der Bauteile ausgeglichen werden und ein Lösen der Passung 15 verhindert werden.

## Patentansprüche

1. Gasturbine (1) mit einer Turbine (2), umfassend ein Turbinengehäuse (3), einen äußeren (4) und einen inneren Gehäuseteil (5), zwischen denen im Betrieb der Gasturbine (1) ein Heißgas strömt, wobei zwischen dem äußeren Gehäuseteil (4) und dem Turbinengehäuse (3) zumindest teilweise ein Ringkanal (6) gebildet ist, der dazu ausgebildet ist, ein Kühlfluid aufzunehmen, und mit einem in Strömungsrichtung eines Heißgases der Turbine (2) nachgelagerten Abgasgehäuse (7) mit einem Lagersystem (8) für einen Rotor, umfassend über den Umfang angeordnete Lagerstreben (9), die sich von einem Wellenlager (10) zu einem Außengehäuse (11) erstrecken und im Heißgaspfad eines im Abgasgehäuse (7) angeordneten Abgasdiffusors (12) durch einen weiteren Strebensatz (13) abgeschirmt werden, der die Lagerstreben (9) umgibt und der hohl ausgeführt ist, und als Stütze für den Diffusor (12) dient, so dass die Lagerstreben (9) vor dem Heißgas geschützt sind und mittels durch den Hohlraum (14) strömender Luft gekühlt werden können, wobei zur Zentrierung von Turbine (2) und Abgasgehäuse (7) diese über eine Passung (15) miteinander verbunden sind, **dadurch gekennzeichnet, dass** die Turbine (2) und das Abgasgehäuse (7) unabhängig voneinander mit Kühlluft versorgt werden können, so dass sich Kühlluftmengen für Turbine und Abgasgehäuse und jeweils dort erreichbare Temperaturen getrennt einstellen lassen.

2. Gasturbine (1) nach Anspruch 1, wobei der Ringkanal (6) in Umfangsrichtung durch eine Abtrennung (16) fluiddicht vom Abgasgehäuse (7) getrennt ist.

3. Gasturbine (1) nach Anspruch 2, wobei die Abtrennung (16) als Trennblech ausgebildet ist.

4. Gasturbine (1) nach einem der vorhergehenden Ansprüche, wobei die Lagerstreben (9) Kopfseiten (17) umfassen und das Kühlmittel den Kopfseiten (17) der Lagerstreben (9) zuführbar ist.

5. Gasturbine (1) nach einem der vorhergehenden Ansprüche, wobei jede der Lagerstreben (9) einen in der jeweiligen Lagerstrebe (9) angeordneten Kühlhohlraum (18) zur Führung eines Kühlmittels von radial außen nach radial innen aufweist.

6. Gasturbine (1) nach Anspruch 5, wobei die Kühlhohlräume (18) im Bereich des Wellenlagers (10) enden.

7. Gasturbine (1) nach einem der vorhergehenden Ansprüche, weiter umfassend eine Vorrichtung (19) zur Regelung einer zentrischen Positionierung von Turbine (2) und Abgasgehäuse (7) über jeweils zugeführte Kühlmittelmengen.

8. Verfahren zum Betreiben einer Gasturbine (1) gemäß einem der vorhergehenden Ansprüche, wobei Kühlmittel der Turbine (2) und dem Abgasgehäuse (7) getrennt zugeführt werden, so dass die Kühlluftmengen für Turbine und Abgasgehäuse und die jeweils dort erreichbaren Temperaturen getrennt eingestellt werden.

9. Verfahren nach Anspruch 8, wobei Turbine (2) und Abgasgehäuse (7) zentriert werden, indem ihnen Kühlmittel geregelt zugeführt wird.

10. Verfahren nach einem der Ansprüche 8 oder 9, wobei Kühlmittel so zugeführt wird, dass eine unterschiedliche thermische Ausdehnung von Turbine und Abgasgehäuse vermieden wird, so dass eine genaue zentrische Positionierung in einer Passung (15) an einer Schnittstelle der Turbine (2) und des Abgasgehäuses (7) gewährleistet ist.

## Claims

1. Gas turbine (1) having a turbine (2), comprising a turbine housing (3), an outer (4) and an inner housing portion (5) between which a hot gas flows during operation of the gas turbine (1), wherein there is formed between the outer housing portion (4) and the turbine housing (3) at least partially an annular channel (6) which is constructed to receive a cooling fluid, and having an exhaust gas housing (7) which is arranged downstream of the turbine (2) in the flow direction of a hot gas and which has a bearing system (8) for a rotor, comprising bearing struts (9) which are arranged over the periphery and which extend from a shaft bearing (10) to an outer housing (11) and which are shielded in the hot gas path of an exhaust gas diffuser (12) which is arranged in the exhaust gas housing (7) by an additional strut set (13) which surrounds the bearing struts (9) and which is constructed in a hollow manner and which acts as a support for the diffuser (12) so that the bearing struts (9) are protected from the hot gas and can be cooled by means of air flowing through the hollow space (14), wherein in order to center the turbine (2) and exhaust gas housing (7) they are connected to each other by means of a fit (15), **characterized in that** the turbine (2) and the exhaust gas housing (7) can be supplied with cooling air independently of each other, so that quantities of cooling air for the turbine and exhaust gas housing and temperatures which can be reached at that location in each case can be adjusted separately.

2. Gas turbine (1) according to Claim 1, wherein the annular channel (6) is separated from the exhaust gas housing (7) in a fluid-tight manner in the peripheral direction by means of a partition (16).

3. Gas turbine (1) according to Claim 2, wherein the partition (16) is constructed as a partition sheet.

4. Gas turbine (1) according to one of the preceding claims, wherein the bearing struts (9) comprise upper sides (17) and the coolant can be supplied to the upper sides (17) of the bearing struts (9).

5. Gas turbine (1) according to one of the preceding claims, wherein each of the bearing struts (9) has a cooling hollow space (18) which is arranged in the respective bearing strut (9) for guiding a coolant from the radially outer side to the radially inner side.

6. Gas turbine (1) according to Claim 5, wherein the cooling hollow spaces (18) terminate in the region of the shaft bearing (10).

7. Gas turbine (1) according to one of the preceding claims, further comprising a device (19) for controlling a central positioning of the turbine (2) and exhaust gas housing (7) by means of coolant quantities which are supplied in each case.

8. Method for operating a gas turbine (1) according to one of the preceding claims, wherein coolant is supplied separately to the turbine (2) and the exhaust gas housing (7), so that the quantities of cooling air for the turbine and exhaust gas housing and the temperatures which can be reached at that location in each case are adjusted separately.

9. Method according to Claim 8, wherein the turbine (2) and the exhaust gas housing (7) are centered by coolant being supplied to them in a controlled manner.

10. Method according to either of Claims 8 or 9, wherein coolant is supplied in such a manner that a different thermal expansion of the turbine and exhaust gas housing is prevented so that a precise central positioning in a fit (15) at an interface of the turbine (2) and the exhaust gas housing (7) is ensured.

## Revendications

1. Turbine à gaz (1) ayant une turbine (2), comprenant une enveloppe (3) de turbine, une partie extérieure (4) et une partie intérieure (5) d'enveloppe, entre lesquelles, lorsque la turbine à gaz (1) fonctionne, passe un gaz chaud, dans laquelle, entre la partie (4) extérieure de l'enveloppe et l'enveloppe (3) de la turbine, est formé, au moins en partie, un canal (6) annulaire, constitué pour recevoir un fluide de refroidissement, et comprenant une enveloppe (7) de gaz d'échappement, montée dans le sens de passage d'un gaz chaud en aval de la turbine (2) et ayant un système (8) de palier pour un rotor, comprenant des entretoises (9) de palier disposées sur le pourtour, qui s'étendent d'un palier (10) d'arbre à une enveloppe (11) extérieure et qui sont protégées, dans le trajet de gaz chaud d'un diffuseur (12) de gaz d'échappement disposé dans l'enveloppe (7) de gaz d'échappement, par un autre jeu (13) d'entretoises, qui entoure les entretoises (9) de palier et qui est réalisé creux et qui sert d'appui au diffuseur (12), de manière à protéger les entretoises (9) de palier du gaz chaud et de manière à pouvoir les refroidir par de l'air passant dans l'espace (14) creux, dans laquelle, pour le centrage de la turbine (2) et de l'enveloppe (7) de gaz d'échappement, ceux-ci sont reliés entre eux par un ajustement (15), **caractérisé en ce que** la turbine (2) et l'enveloppe (7) de gaz d'échappement peuvent être alimentées en air de refroidissement indépendamment l'une de l'autre, de manière à pouvoir régler distinctement les quantité d'air de refroidissement pour la turbine et l'enveloppe de gaz d'échappement et les températures respectives, qui peuvent y être atteintes.

2. Turbine à gaz (1) suivant la revendication 1, dans laquelle le canal (6) annulaire est, dans la direction du pourtour, séparé par une séparation (16), d'une manière étanche au fluide, de l'enveloppe (7) de gaz d'échappement.

3. Turbine à gaz (1) suivant la revendication 2, dans laquelle la séparation (16) est constituée sous la forme d'une tôle de séparation.

4. Turbine à gaz (1) suivant l'une des revendications précédentes, dans laquelle les entretoises (9) de palier comprennent des côtés (17) de tête et le fluide de refroidissement peut être envoyé aux côtés (17) de tête des entretoises (9) de palier.

5. Turbine à gaz (1) suivant l'une des revendications précédentes, dans laquelle chacune des entretoises (9) de palier a un espace (18) creux de refroidissement, disposé dans l'entretoise (9) de palier respective, pour conduire un fluide de refroidissement de l'extérieur radialement vers l'intérieur radialement.

6. Turbine à gaz (1) suivant la revendication 5, dans laquelle les espaces (18) creux de refroidissement se terminent dans la région du palier (10) d'arbre.

7. Turbine à gaz (1) suivant l'une des revendications précédentes, comprenant, en outre, un système (19) de réglage d'une mise en position centrée de la turbine (2) et de l'enveloppe (7) de gaz d'échappement par des quantités de fluide de refroidissement apportées, respectivement.

8. Procédé pour faire fonctionner une turbine à gaz (1) suivant l'une des revendications précédentes, dans lequel on envoi de manière distincte du fluide de refroidissement à la turbine (2) et à l'enveloppe (7) de gaz d'échappement, de manière à régler de manière distincte les quantités d'air de refroidissement pour la turbine et l'enveloppe de gaz d'échappement et les températures respectives, qui peuvent y être obtenues.

9. Procédé suivant la revendication 8, dans laquelle on centre la turbine (2) et l'enveloppe (7) de gaz d'échappement en leur envoyant, de manière réglée, du fluide de refroidissement.

10. Procédé suivant l'une des revendications 8 ou 9, dans lequel on envoie du fluide de refroidissement de manière à empêcher une dilatation thermique différente de la turbine et de l'enveloppe de gaz d'échappement, de façon à assurer une mise en position centrée exacte dans un ajustement (15) à une interface de la turbine (2) et de l'enveloppe (7) de gaz d'échappement.
